(19) **Europäisches Patentamt / European Patent Office / Office européen des brevets**

(11) **EP 4 417 069 B1**

(12) **EUROPEAN PATENT SPECIFICATION**

(45) Date of publication and mention of the grant of the patent:
**25.03.2026 Bulletin 2026/13**

(21) Application number: **23846787.2**

(22) Date of filing: **07.06.2023**

(51) International Patent Classification (IPC):
*A24D 3/06* (2006.01)     *B01D 39/18* (2006.01)
*A24D 3/08* (2006.01)     *A24D 3/10* (2006.01)
*A24D 1/02* (2006.01)     *A24D 1/04* (2006.01)
*A24D 3/02* (2006.01)     *A24D 3/04* (2006.01)
*A24D 3/16* (2006.01)     *A24D 3/14* (2006.01)

(52) Cooperative Patent Classification (CPC):
**A24D 3/10; A24D 3/061; A24D 3/062; A24D 3/068; A24D 3/14; A24D 3/16; B01D 39/18;** A24D 1/04; B01D 2239/086

(86) International application number:
**PCT/KR2023/007722**

(87) International publication number:
**WO 2024/025127 (01.02.2024 Gazette 2024/05)**

(54) **BIODEGRADABLE ECO-FRIENDLY FILTER**

BIOLOGISCH ABBAUBARER UMWELTFREUNDLICHER FILTER

FILTRE ÉCOLOGIQUE BIODÉGRADABLE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.07.2022 KR 20220093836**

(43) Date of publication of application:
**21.08.2024 Bulletin 2024/34**

(73) Proprietors:
- **KT&G Corporation**
  **Daedeok-gu**
  **Daejeon 34337 (KR)**
- **Kolon Industries, Inc.**
  **Seoul 07793 (KR)**

(72) Inventors:
- **HA, Sung Hoon**
  **Daejeon 34128 (KR)**
- **YANG, Jin Chul**
  **Daejeon 34128 (KR)**
- **MA, Kyeng Bae**
  **Daejeon 34128 (KR)**

- **CHEONG, Bong Su**
  **Daejeon 34128 (KR)**
- **SEO, Seung Dong**
  **Gumi-si, Gyeongsangbuk-do 39366 (KR)**
- **LEE, Jeong Hun**
  **Gumi-si, Gyeongsangbuk-do 39366 (KR)**
- **JEONG, Jong Cheol**
  **Gumi-si, Gyeongsangbuk-do 39366 (KR)**
- **JIN, Sang Woo**
  **Gumi-si, Gyeongsangbuk-do 39366 (KR)**
- **HWANG, Yeong Nam**
  **Gumi-si, Gyeongsangbuk-do 39366 (KR)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
EP-A1- 3 939 444         WO-A1-2018/204940
WO-A1-2021/246624        JP-A- 2022 017 968
KR-A- 20160 048 738      KR-A- 20160 048 738
US-A1- 2017 027 234      US-A1- 2018 235 286
US-B2- 10 524 500        US-B2- 10 986 863

EP 4 417 069 B1

## Description

### Technical Field

The present disclosure relates to an eco-friendly filter with biodegradability and a smoking article to which the eco-friendly filter is applied.

### Background Art

Cellulose acetate (CA) tow is a chemically modified material made by reacting sulfuric acid and acetic acid with cellulose. In the CA tow used in manufacturing conventional cigarette filters, a plasticizer is applied to improve filter hardness, and in a case in which a filter is manufactured using the CA tow, not only the hardness is improved, but also a binding force between fibers of the CA tow is enhanced. However, a CA filter manufactured using a plasticizer has a problem that it is difficult to meet analysis passing criteria such as marine conditions.

Meanwhile, lyocell tow (L-tow) is a material in the form of a fiber bundle obtained by melting cellulose in an eco-friendly solvent named N-Methylmorpholine N-Oxide (NMMO), instead of modifying the structure of cellulose through a chemical reaction as in the CA tow. The L-tow is an eco-friendly material containing cellulose as its main component, and a binder used to improve hardness of a filter manufactured using the L-tow and a binding force between fibers of the L-tow also corresponds to an eco-friendly material. Document KR20160048738 discloses a lyocell tow tobacco filter comprising a plurality of lyocell fibres that are connected to each other by a curing agent.

### Disclosure

### Technical Problem

In order to overcome the problems and/or limitations of the related art, the present disclosure is directed to providing an eco-friendly lyocell filter with biodegradability, which includes lyocell tow, a binder solution, and filter wrapping paper, and a smoking article including the same.

### Technical Solution

The present disclosure provides a smoking article filter including lyocell tow including lyocell fibers, a binder solution, and filter wrapping paper and having 90% or higher biodegradation within 6 months according to the American Society for Testing and Materials (ASTM) D6691 under marine conditions at 30 °C, wherein the binder in the binder solution is a polyester-based binder.

Another aspect of the present disclosure provides a smoking article including a tobacco medium portion, a filter portion, and a wrapper, wherein the filter portion includes a smoking article filter as described above.

### Advantageous Effects

According to one aspect of the present disclosure, since lyocell fibers having a cellulose network structure are formed into tow to form a filter rod, and the filter rod is applied to a cigarette filter using an eco-friendly binder solution, hardness of the filter can be improved, and an eco-friendly filter with biodegradability can be provided.

Advantageous effects of the present disclosure are not limited to those mentioned above and should be understood as including all advantageous effects inferable from the detailed description of the present disclosure or the configuration of the disclosure stated in the claims.

### Description of Drawings

FIG. 1 is a view illustrating a schematic configuration of a smoking article according to one embodiment of the present disclosure.

FIG. 2 is a view illustrating a schematic configuration of a smoking article including a wrapper according to one embodiment of the present disclosure.

FIG. 3 is a graph showing biodegradation over time of cellulose, a lyocell filter, lyocell tow, and a cellulose acetate filter under marine conditions for 28 days.

FIG. 4 is a graph showing biodegradation over time of cellulose, a lyocell filter, lyocell tow, and a cellulose acetate filter under marine conditions for 182 days.

## Modes of the Invention

Hereinafter, embodiments will be described in detail with reference to the accompanying drawings.

Terms used in the embodiments are used for description purposes only and should not be construed as limiting. A singular expression includes a plural expression unless the context clearly indicates otherwise. In the application, terms such as "include" or "have" should be understood as indicating the presence of features, numbers, steps, operations, elements, parts, or combinations thereof and not excluding the possibility of the presence or addition of one or more other features, numbers, steps, operations, elements, parts, or combinations thereof in advance.

Unless otherwise defined, all terms including technical or scientific terms used herein have the same meaning as commonly understood by one of ordinary skill in the art to which the embodiments pertain. Terms, such as those defined in commonly used dictionaries, should be construed as having a meaning that is consistent with their meaning in the context of the relevant art and are not to be construed in an idealized or overly formal sense unless expressly so defined herein.

Also, in giving descriptions with reference to the accompanying drawings, the same reference numerals are assigned to the same components wherever possible even when the components are illustrated in different drawings, and repeated description thereof will be omitted. In describing the embodiments, when detailed description of a known related art is determined as having the possibility of unnecessarily obscuring the gist of the embodiments, the detailed description thereof will be omitted.

Also, in describing components of the embodiments, terms such as first, second, A, B, (a), and (b) may be used. Such terms are only for distinguishing one component from another component, and the essence, order, sequence, or the like of the corresponding component is not limited by the terms.

A component including a common function with a component included in any one embodiment will be described using the same name in another embodiment. Unless the context clearly indicates otherwise, description made in any one embodiment may apply to another embodiment, and detailed description will be omitted in a repeated range.

In this specification, a "smoking article" may refer to anything capable of generating an aerosol, such as tobacco (cigarette) and cigars. The smoking article may include an aerosol-generating material or an aerosol-forming substrate. Also, the smoking article may include a solid material based on tobacco raw materials, such as reconstituted tobacco leaves, cut tobacco leaves, and reconstituted tobacco. A smoking material may include a volatile compound.

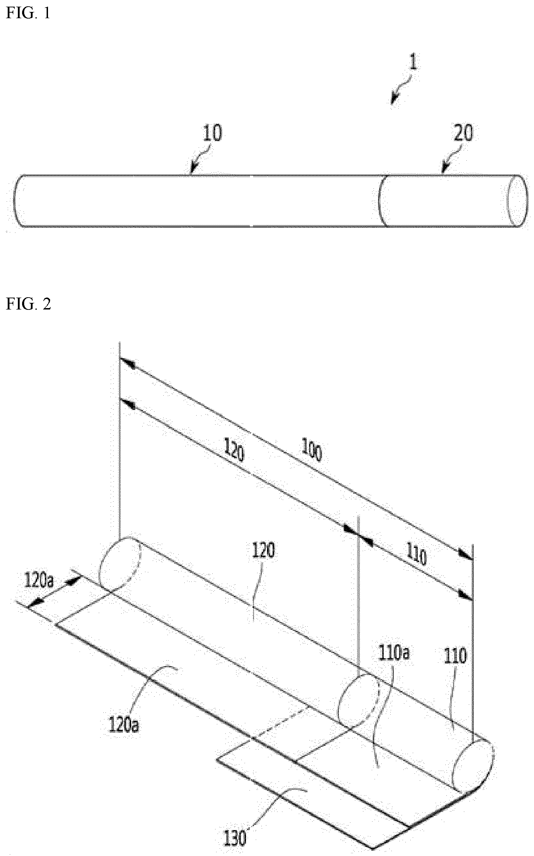

Also, in this specification, "upstream" or "upstream direction" refers to a direction moving away from an oral region of a user smoking a smoking article 1, and "downstream" or "downstream direction" refers to a direction approaching the oral region of the user smoking the smoking article 1. For example, in the smoking article 1 illustrated in FIG. 1, a tobacco medium portion 10 is disposed upstream or in an upstream direction of a cigarette filter portion 20.

Further, in the specification, although a case in which the smoking article 1 is a combustion-type cigarette is described as an example, the present disclosure is not limited thereto, and the smoking article 1 may also correspond to a heating-type cigarette used along with an aerosol generation device (not illustrated), such as an electronic cigarette device.

One embodiment of the present disclosure provides a smoking article filter including lyocell tow including lyocell fibers, a binder solution, and filter wrapping paper and having 90% or higher biodegradation within 6 months according to the American Society for Testing and Materials (ASTM) D6691 under marine conditions at 30 °C.

The lyocell tow including the lyocell fibers contains cellulose as its main component and corresponds to an eco-friendly material. The lyocell tow including the lyocell fibers may have 15 to 60 crimps (pleats) per inch and may have a whiteness of 80 to 95%.

In a case in which the number of crimps exceeds the above range, a strength of the lyocell tow weakens. Conversely, in a case in which the number of crimps of the lyocell tow is less than the above range, filling power of the tow is reduced, and a problem occurs that it is difficult to implement appropriate resistance to draw compared to weight.

In a case in which the whiteness is less than 80%, color of the filter becomes yellowish, greyish, or the like, and in this case, the color may cause the smoker to have a negative perception that the filter is not clean. Also, a whiteness higher than 95% is technically difficult to implement and, even when implemented, causes a problem of a cost increase.

Meanwhile, in order to improve the hardness of the manufactured lyocell filter and enhance the binding force between the fibers of the tow, a binder solution is included when manufacturing the filter. A binder used in the binder solution is also made of an eco-friendly material, and a solvent used to dissolve the binder is also an eco-friendly solvent. The binder is a polyester-based binder.

More specifically, examples of the polyester-based binder may be polyester including one or more selected from the group consisting of C5-C12 alkylene, C5-C12 arylene, and C5-C12 hetero-arylene.

According to the invention the polyester-based binder is used because the polyester-based binder can more effectively prevent the hardness of the filter from being reduced due to the smoker's saliva or the like during smoking.

Specific examples of the eco-friendly solvent for dissolving the binder may include water, ethanol, propylene glycol (PG), glycerin, and the like. More specifically, the eco-friendly solvent may be PG.

In a case in which PG is used as the solvent for dissolving the binder, since PG serves as a release agent, and thus a phenomenon in which the lyocell tow is adhered and stuck between rolls of filter equipment is reduced, efficiency of the filter manufacturing process is increased, and it is possible to prevent and overcome a phenomenon in which strength of a filter made of a cellulose-based material is weakened that occurs in a case in which a polar solvent such as water is used.

Meanwhile, the filter wrapping paper included in the lyocell filter may correspond to porous paper, nonporous paper, or the like that may surround the lyocell tow to which the binder is applied and maintain a cylindrical shape of the filter. Also, the filter wrapping paper may be manufactured using flax, wood pulp, or the like, and combustibility and a taste of tobacco are required to be maintained during burning of the filter wrapping paper. Further, the filter wrapping paper may include a filler, and accordingly, opacity of the filter wrapping paper can be increased, porosity can be imparted to the filter wrapping paper, and smoothness and ash integrity of the filter wrapping paper can be improved. Examples of the filler include materials such as calcium carbonate, titanium dioxide, and magnesium oxide.

Still another embodiment of the present disclosure may provide a smoking article comprising a tobacco medium portion, a filter portion including a smoking article filter as described above and s wrapper.

The filter portion included in the smoking article is the lyocell filter described above, and specific components included in the filter portion are as described above.

Also, the filter portion of the smoking article may be divided into two or more segments and may be divided into a first segment, a second segment, and the like, and as long as one of the two or more segments corresponds to the filter according to one embodiment of the present disclosure including the lyocell tow and the binder solution, regardless of where the one segment is disposed, the filter portion may be included within the scope of the present disclosure. Further, one or more of the two or more segments may include a capsule capable of generating a flavor, and the shape of the capsule may correspond to a spherical shape, a cylindrical shape, or the like but is not limited thereto.

Further, the tobacco medium portion may generally include a tobacco material including nicotine such as tobacco leaves and may further include an excipient such as a binder or other additives. As an example, a tobacco medium included in the tobacco medium portion of the present disclosure may be produced in the form of granules including the tobacco material, the excipient, and the like. Also, a flavoring liquid such as menthol or a moisturizer may be dispersed in the tobacco medium in order to be added to the tobacco medium portion.

In the present disclosure, the tobacco material is a material forming an aerosol-generating substrate and may be pieces of tobacco leaves, tobacco stems, tobacco powder generated while processing tobacco, and/or strips of tobacco leaves. The tobacco leaves may be at least one or more selected from bright tobacco leaves, burley tobacco leaves, oriental tobacco leaves, cigar tobacco leaves, and toasted tobacco leaves, but the present disclosure is not limited thereto.

Meanwhile, as illustrated in FIG. 2, the wrapper according to one embodiment of the present disclosure may include a wrapper for each component of the smoking article and may be divided into a tobacco medium portion wrapper 110a configured to wrap around the tobacco medium portion, a filter portion wrapper (filter wrapping paper) 120a configured to wrap around the filter, and the like. Further, in the case in which the filter portion is divided into a plurality of segments as described above, the wrapper according to one embodiment of the present disclosure may include a wrapper for each segment that is configured to wrap around the segment. Also, the smoking article may include a tipping wrapper 130 configured to wrap around a partial area of the tobacco medium portion and the filter portion in order to fix the connection between the tobacco medium portion and the filter portion and may also include an outer wrapper positioned at the outermost portion of the smoking article while wrapping around all of the tobacco medium portion, the filter portion, and the like in order to maintain the overall shape of the smoking article.

One or more perforations may be selectively formed in a circumferential direction in the tipping wrapper configured to combine the tobacco medium portion and the filter in order to allow outside air to enter or an internal gas to exit. In this way, there are advantageous effects that an air dilution rate of a cigarette can be increased, and the amount of delivered mainstream smoke components can be controlled.

Hereinafter, the configurations of the present disclosure and the advantageous effects according thereto will be described in more detail using examples and comparative examples. However, the examples are merely for describing the present disclosure in more detail, and the scope of the present disclosure is not limited by the examples.

## Examples

### (1) Experiment for evaluating biodegradation under marine conditions

Analysis samples ground to a size of 1 mm or less and a control sample, which is standard cellulose powder, were used to conduct an experiment (for 28 days and 182 days) under marine conditions at 30 °C.

In order to evaluate biodegradation, the amount of carbon dioxide generated due to decomposition of the samples and the amount of carbon dioxide generated due to decomposition of the standard product were measured, and the amount of carbon dioxide measured in the analysis samples and the amount of carbon dioxide generated due to decomposition of the standard product were compared to calculate relative biodegradation.

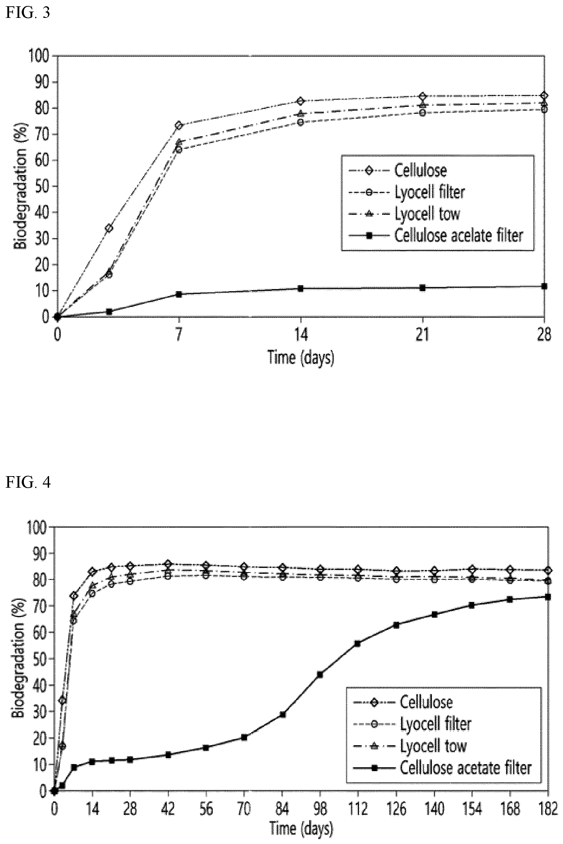

As a result, as shown in Table 1 and FIG. 3 (which correspond to the experiment for 28 days) and Table 2 and FIG. 4 (which correspond to the experiment for 182 days), the lyocell filter according to one embodiment of the present disclosure was confirmed as having 90% or higher biodegradation relative to the standard product under marine conditions not only within 6 months but also in a short period of 28 days.

[Table 1]

| Test series | TOC (%) | Net $CO_2$ (mg) | Biodegradation(%) | | |
|---|---|---|---|---|---|
| | | | AVG | SD | REL |
| Cellulose | 42.7 | 79.6 | 84.7 | 1.2 | 100.0 |
| Lyocell Filter | 42.0 | 73.5 | 79.5 | 1.9 | 93.9 |
| Lyocell Tow | 41.5 | 74.9 | 82.0 | 1.1 | 96.8 |
| Cellulose Acetate Filter | 47.5 | 12.1 | 11.6 | 0.9 | 13.7 |

(Result of evaluating biodegradation under marine conditions for 28 days)

[Table 2]

| Test series | TOC (%) | Net $CO_2$ (mg) | Biodegradation(%) | | |
|---|---|---|---|---|---|
| | | | AVG | SD | REL |
| Cellulose | 42.7 | 78.1 | 83.1 | 3.2 | 100.0 |
| Lyocell Filter | 42.0 | 73.4 | 79.4 | 3.4 | 95.5 |
| Lyocell Tow | 41.5 | 73.0 | 79.9 | 1.1 | 96.1 |
| Cellulose Acetate Filter | 47.5 | 76.8 | 73.5 | 3.9 | 88.4 |

(Result of evaluating biodegradation under marine conditions for 182 days)

* AVG = Average

* SD = Standard deviation

* REL = Relative biodegradation

**(2) Experiment for degree of collapse due to moisture**

A phenomenon in which the hardness of the filter is reduced due to the smoker's saliva or the like during smoking was simulated to measure the degree of collapse due to moisture of the filter according to the presence/absence of the binder and the type of binder.

Specifically, Filtrona's DHT 200™ was used to measure the hardness of the filter before and after adding water thereto, and 20 $\mu$l of water was added to the filter. The amount of added water was set by, after a group of smokers smoked a cigarette equipped with the lyocell filter, measuring a value of moisture remaining in the filter.

A difference between the hardness before adding water and the hardness after adding water was divided by the initial hardness to determine the degree of collapse, the result of which is shown below.

Hardness (%) = (filter diameter (mm) - length (mm) at which the filter is pressed when pressed by a 300-g weight)/initial filter diameter (mm) $\times 100$

Degree of collapse due to moisture (%) = (filter hardness before adding water - filter hardness after adding water)/(filter hardness before adding water) $\times$100

[Table 3]

| Sample | Hardness (%) | | |
|---|---|---|---|
| | Before adding water | After adding water | Degree of collapse due to moisture |
| Blank | 84.7 | 77.4 | 8.6 |
| PVP | 94.3 | 84.9 | 10.0 |
| Polyester | 91.5 | 86.1 | 5.9 |
| * Blank = sample to which binder was not added | | | |

A polyvinylpyrrolidone (PVP) binder has a characteristic of easily breaking down in water due to a resonance structure of an amide group in the structure thereof, and as shown in Table 3 above, the PVP binder was confirmed as having a degree of collapse due to moisture of 10.0%. In the case of the polyester-based binder, although the polyester-based binder is melted or dispersed in water initially, since the polyester-based binder has a characteristic of not easily breaking down in water after an adhesive strength of the binder is imparted, the degree of collapse due to moisture was measured to be 5.9%, which is low.

From such results, it can be seen that, in the case in which, according to the invention, the polyester-based binder is used as the binder, the degree of collapse due to moisture is further lowered, thus having an effect of preventing the hardness of the filter from being reduced due to the smoker's saliva or the like during smoking, compared to cases in which a binder is not used or other types of binders are used.

**Claims**

1. A smoking article filter comprising:

   lyocell tow including lyocell fibers;
   a binder solution; and
   filter wrapping paper
   wherein biodegradation within 6 months according to the American Society for Testing and Materials (ASTM) D6691 is 90% or higher under marine conditions at 30 °C, and
   wherein a binder in the binder solution is a polyester-based binder.

2. The smoking article filter of claim 1, wherein:

   a degree of collapse due to moisture of the smoking article filter is 7% or lower; and
   the degree of collapse due to moisture is defined by the equation below:
   Degree of collapse due to moisture (%) = (filter hardness before adding water - filter hardness after adding water)/(filter hardness before adding water) $\times$100, wherein the filter hardness before and after adding water is determined as described in the description.

3. The smoking article filter of claim 1, wherein the lyocell tow has 15 to 60 crimps per inch.

4. The smoking article filter of claim 1, wherein the polyester-based binder includes one or more selected from the group consisting of C5-C12 alkylene, C5-C12 arylene, and C5-C12 hetero-arylene.

5. The smoking article filter of claim 1, wherein the binder solution includes a solvent which is one or more selected from the group consisting of water, ethanol, propylene glycol, and glycerin.

6. The smoking article filter of claim 5, wherein the solvent is one or more of propylene glycol and glycerin.

**7.** The smoking article filter of claim 1, wherein the filter wrapping paper is manufactured using flax or wood pulp and includes a filler which is one or more selected from the group consisting of calcium carbonate, titanium dioxide, and magnesium oxide.

**8.** A smoking article comprising:

a tobacco medium portion;
a filter portion including a smoking article filter according to claim 1; and
a wrapper.

**9.** The smoking article of claim 8, wherein:
the polyester-based binder includes one or more selected from the group consisting of C5-C12 alkylene, C5-C12 arylene, and C5-C12 hetero-arylene.

**10.** The smoking article of claim 8, wherein the binder solution includes a solvent which is one or more selected from the group consisting of water, ethanol, propylene glycol, and glycerin.

**11.** The smoking article of claim 10, wherein the solvent is one or more of propylene glycol and glycerin.

**12.** The smoking article of claim 8, wherein the filter portion further includes a capsule capable of generating a flavor.

**13.** The smoking article of claim 8, wherein a flavoring liquid is added to the tobacco medium portion.


**Patentansprüche**

**1.** Rauchartikelfilter, umfassend:

Lyocell-Tow, das Lyocell-Fasern enthält;
eine Bindemittellösung; und
Filterumhüllungspapier,
wobei die biologische Abbaubarkeit innerhalb von 6 Monaten gemäß der American Society for Testing and Materials (ASTM) D6691 unter Meeresbedingungen bei 30 °C 90 % oder mehr beträgt, und wobei ein Bindemittel in der Bindemittellösung ein Bindemittel auf Polyesterbasis ist.

**2.** Rauchartikelfilter nach Anspruch 1, wobei:

der Grad des Zusammenfallens aufgrund von Feuchtigkeit des Rauchartikelfilters 7 % oder weniger beträgt; und
der Grad des Zusammenfallens aufgrund von Feuchtigkeit durch die folgende Gleichung definiert ist:

Grad des Zusammenfallens aufgrund von Feuchtigkeit (%) = (Filterhärte vor Zugabe von Wasser - Filterhärte nach Zugabe von Wasser)/(Filterhärte vor Zugabe von Wasser) $\times$ 100,

wobei die Filterhärte vor und nach der Zugabe von Wasser wie in der Beschreibung dargelegt bestimmt wird.

**3.** Rauchartikelfilter nach Anspruch 1, wobei das Lyocell-Tow 15 bis 60 Kräuselungen pro Inch aufweist.

**4.** Rauchartikelfilter nach Anspruch 1, wobei das Bindemittel auf Polyesterbasis eines oder mehrere aus der Gruppe bestehend aus C5-C12-Alkylen, C5-C12-Arylen und C5-C12-Heteroarylen enthält.

**5.** Rauchartikelfilter nach Anspruch 1, wobei die Bindemittellösung ein Lösungsmittel enthält, das eines oder mehrere aus der Gruppe bestehend aus Wasser, Ethanol, Propylenglykol und Glycerin ist.

**6.** Rauchartikelfilter nach Anspruch 5, wobei das Lösungsmittel eines oder mehrere von Propylenglykol und Glycerin ist.

**7.** Rauchartikelfilter nach Anspruch 1, wobei das Filterumhüllungspapier unter Verwendung von Flachs oder Zellstoff hergestellt ist und einen Füllstoff enthält, der eines oder mehrere aus der Gruppe bestehend aus Calciumcarbonat, Titandioxid und Magnesiumoxid ist.

8. Rauchartikel, umfassend:

    einen Tabakmediumabschnitt;
    einen Filterabschnitt, der einen Rauchartikelfillter nach Anspruch 1 aufweist; und
    eine Umhüllung.

9. Rauchartikel nach Anspruch 8, wobei:
das Bindemittel auf Polyesterbasis eines oder mehrere aus der Gruppe bestehend aus C5-C12-Alkylen, C5-C12-Arylen und C5-C12-Heteroarylen enthält.

10. Rauchartikel nach Anspruch 8, wobei die Bindemittellösung ein Lösungsmittel enthält, das eines oder mehrere aus der Gruppe bestehend aus Wasser, Ethanol, Propylenglykol und Glycerin ist.

11. Rauchartikel nach Anspruch 10, wobei das Lösungsmittel eines oder mehrere von Propylenglykol und Glycerin ist.

12. Rauchartikel nach Anspruch 8, wobei der Filterabschnitt des Weiteren eine Kapsel aufweist, die in der Lage ist, ein Aroma zu generieren.

13. Rauchartikel nach Anspruch 8, wobei dem Tabakmediumabschnitt eine Aromaflüssigkeit zugesetzt ist.


**Revendications**

1. Filtre d'article à fumer comprenant :

    une mèche de lyocell comprenant des fibres de lyocell ;
    une solution de liant ; et
    un papier d'enveloppement de filtre
    dans lequel la biodégradation dans les 6 mois selon l'American Society for Testing and
    Materials (ASTM) D6691 est de 90 % ou plus dans des conditions maritimes à 30 °C, et dans lequel un liant dans la
    solution de liant est un liant à base de polyester.

2. Filtre d'article à fumer selon la revendication 1, dans lequel :

    un degré d'affaissement dû à l'humidité du filtre d'article à fumer est inférieur ou égal à 7 % ;
    et le degré d'affaissement dû à l'humidité est défini par l'équation ci-dessous :
    degré d'affaissement dû à l'humidité (%) = (dureté du filtre avant l'ajout d'eau - dureté du filtre après l'ajout d'eau)/(dureté du filtre avant l'ajout d'eau) $\times$ 100, dans lequel la dureté du filtre avant et après l'ajout d'eau est déterminée comme indiqué dans la description.

3. Filtre d'article à fumer selon la revendication 1, dans lequel la mèche de lyocell a de 15 à 60 ondulations par pouce.

4. Filtre d'article à fumer selon la revendication 1, dans lequel le liant à base de polyester comporte l'un ou plusieurs choisis dans le groupe constitué par alkylène C5-C12, arylène C5-C12, et hétéro-arylène C5-C12.

5. Filtre d'article à fumer selon la revendication 1, dans lequel la solution de liant comporte un solvant qui est l'un ou plusieurs choisis dans le groupe constitué par eau, éthanol, propylène glycol, et glycérine.

6. Filtre d'article à fumer selon la revendication 5, dans lequel le solvant est l'un ou plusieurs parmi propylène glycol et glycérine.

7. Filtre d'article à fumer selon la revendication 1, dans lequel le papier d'enveloppement de filtre est fabriqué à partir de pâte de lin ou de bois et comporte une charge qui est l'un ou plusieurs choisis dans le groupe constitué par carbonate de calcium, dioxyde de titane et oxyde de magnésium.

8. Article à fumer comprenant :

une partie milieu de tabac ;
une partie filtre comportant un filtre d'article à fumer selon la revendication 1 ; et
une enveloppe.

9. Article à fumer selon la revendication 8, dans lequel :
le liant à base de polyester comporte l'un ou plusieurs choisis dans le groupe constitué par alkylène C5-C12, arylène C5-C12, et hétéro-arylène C5-C12.

10. Article à fumer selon la revendication 8, dans lequel la solution de liant comporte un solvant qui est l'un ou plusieurs choisis dans le groupe constitué par eau, éthanol, propylène glycol, et glycérine.

11. Article à fumer selon la revendication 10, dans lequel le solvant est l'un ou plusieurs parmi propylène glycol et glycérine.

12. Article à fumer selon la revendication 8, dans lequel la partie filtre comporte en outre une capsule susceptible de générer un arôme.

13. Article à fumer selon la revendication 8, dans lequel un liquide aromatisant est ajouté à la partie milieu de tabac.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20160048738